# EUROPÄISCHE PATENTSCHRIFT

(11) **EP 3 404 308 B1**
(45) Veröffentlichungstag und Bekanntmachung des Hinweises auf die Patenterteilung: **09.12.2020**
(21) Anmeldenummer: 17171994.1
(22) Anmeldetag: 19.05.2017
(51) Int. Cl.: F16L 43/00, F16L 47/32, B29C 45/16, B29C 45/26

(54) **FITTING**
FITTING
RACCORD

(43) Veröffentlichungstag der Anmeldung: 21.11.2018
(73) Patentinhaber: Geberit International AG, 8645 Jona (CH)
(72) Erfinder: Lippuner, Marc, 8645 Jona (CH)
(74) Vertreter: Frischknecht, Harry Ralph

(56) Entgegenhaltungen:
- EP-A1- 3 012 084
- WO-A1-2008/119628
- JP-A- H0 531 760
- US-B1- 6 284 160

## Beschreibung

### TECHNISCHES GEBIET

Die vorliegende Erfindung betrifft ein Fitting nach dem Oberbegriff von Anspruch 1. Die vorliegende Erfindung betrifft weiter ein Spritzgiessverfahren zur Herstellung eines Fittings.

### STAND DER TECHNIK

Aus dem Stand der Technik sind Fittings in vielen Formen bekannt. Beispielsweise sind Fittings in der Gestalt von T-Stücken oder Bogenstücken aus dem Stand der Technik bekannt geworden. Derartige Fittings dienen der Verbindung von winklig geneigt zueinander stehenden Leitungszweigstücken. Solche Fittings werden aus Metall oder Kunststoff gefertigt.

Viele Fittings aus dem Stand der Technik weisen dabei im Bereich des winklig geneigten Übergangs eine Form auf, welche grosse strömungstechnische Verluste bedingt. Die Form ist dabei meist herstellbedingt, weil die Bereich des winklig geneigten Übergangs nicht für ein Werkzeug zugänglich, so dass diese Bereiche optimiert werden können.

Aus dem Stand der Technik sind Lösungen für dieses Problem bekannt geworden. Beispielsweise wird in der DE 10 2009 039 983 vorgeschlagen, den Fitting derart auszubilden, dass dieser schalenartig geteilt wird und dann die beiden Schalen mediendicht verbunden werden. Die schalenartige Teilung hat den Nachteil, dass eine verhältnismässig grosse Trennfläche zwischen den beiden Schalen vorhanden ist, was die Dauerhaftigkeit der Fittings negativ beeinträchtigt.

Aus der DE 10 2011 013 099 ist ein Fitting bekannt geworden, welcher innerhalb des Durchflusskanals einen Strömungsleitkörper umfasst, der Abzweigbereich strömungstechnisch verbessert. Allerdings ergeht aus der DE 10 2011 013 099 der Nachteil, dass die Fertigung ausgesprochen aufwändig ist. EP3012084 A1 offenbart ein Fitting gemäß dem Oberbegriff des Anspruchs 1.

### DARSTELLUNG DER ERFINDUNG

Ausgehend von diesem Stand der Technik liegt der Erfindung eine Aufgabe zugrunde, ein Fitting anzugeben, welches die Nachteile des Standes der Technik überwindet. Insbesondere soll ein Fitting angegeben werden, dessen Durchflusskanal bezüglich möglicher Druckverlusten optimiert ausgebildet ist und welches sich dennoch wirtschaftlich herstellen lässt. Eine besonders bevorzugte Aufgabe ist es, ein Fitting anzugeben, das unter der Massgabe einer einfachen und effizienten Herstellung dem durchfliessenden Wasser nur einen geringen Widerstand entgegen setzt.

Diese Aufgabe löst der Gegenstand von Anspruch 1. Demgemäss umfasst ein Fitting eine Gehäusewand, die einen Durchflusskanal begrenzt, welcher sich von einem Fittingeingang zu einem Fittingausgang erstreckt. Der Durchflusskanal umfasst einen sich entlang einer ersten Mittelachse erstreckenden ersten Kanalabschnitt und einen sich entlang einer zweiten Mittelachse erstreckenden zweiten Kanalabschnitt. Im Bereich des Übergangs zwischen dem ersten Kanalabschnitt und dem zweiten Kanalabschnitt ist ein Einsatz in einen Durchbruch durch die Gehäusewand eingesetzt, welcher Einsatz stoffschlüssig mit der Gehäusewand in Verbindung steht. Eine Dichtfläche erstreckt sich mindestens teilweise entlang des Durchbruchs. Die Dichtfläche erstreckt sich derart mindestens teilweise entlang des Durchbruchs, dass während der Herstellung des Einsatzes in Zusammenarbeit mit mindestens einem Kern eines Spritzgiesswerkzeuges ein Eindringen vom Spritzmaterial in den Durchflusskanal verhindert wird. Die Dichtfläche ist von der Innenwand des Durchflusskanals abgesetzt ausgebildet. Das heisst die Dichtfläche steht von der besagten Innenwand ab. Als Innenwand wird insbesondere die Innenwand im Bereich des Durchbruchs verstanden.

Die Dichtfläche sorgt also dafür, dass bei der Herstellung des Einsatzes, der in den Durchbruch eingesetzt wird, kein Spritzmaterial in den Durchflusskanal eindringen kann. Hierdurch wird verhindert, dass im Bereich des Durchbruchs während der Herstellung in unkontrollierter Art und Weise Strukturen im Inneren des Durchflusskanals entstehen, welche den Widerstand für durchfliessendes Wasser erhöhen würden. Insofern kann durch die Dichtfläche eine ungewollte Veränderung des Durchflusskanals verhindert werden.

Unter der Ausdrucksweise "in Zusammenarbeit mit einem Kern" wird verstanden, dass der Kern an der Dichtfläche entlang einer Dichtlinie oder über eine Dichtfläche anliegen kann, so dass kein Spritzmaterial zwischen Kern und Dichtfläche eindringen kann.

Die Anordnung des Einsatzes hat den Vorteil, dass die Struktur des Durchflusskanals im Inneren desselben, mit einem während der Herstellung durch den Durchbruch einragenden Kern geformt werden kann. So können beispielsweise bei einem Winkelstück oder einem T-Stück gerundete Übergänge, insbesondere mit grösseren Radien, bereitgestellt werden.

Einsatz und Gehäusewand sind vorzugsweise aus dem gleichen oder einem gleichartigen Material hergestellt. Vorzugsweise ist der gesamte Fitting aus Kunststoff. Das heisst, dass die Gehäusewand und auch das Spritzmaterial Kunststoff ist.

Vorzugsweise setzt sich die Dichtfläche in Richtung der Mittelachse des jeweiligen Abschnittes fort. Das heisst, die Dichtfläche erstreckt sich in Richtung der ersten Mittelachse aus dem ersten Kanalabschnitt in Richtung des zweiten Kanalabschnittes und in Richtung der zweiten Mittelachse aus dem zweiten Kanalabschnitt in Richtung des ersten Kanalabschnittes.

Vorzugsweise schliesst sich die Dichtfläche unmittelbar an die Innenwand des jeweiligen Abschnittes an und bildet eine Fortsetzung der Innenwand im Bereich des Durchbruchs.

Vorzugsweise verbleibt die Dichtfläche nach dem Herstellen des Einsatzes mindestens teilweise im Ursprungszustand. Vorzugsweise verbleibt der Teil der Dichtfläche, welcher von der Kontaktstelle bzw. der Dichtstelle mit dem besagten Kern innenseitig zum Durchflusskanal liegt, in seinem Ursprungszustand. Je nach Dimension bzw. Ausbildung der Dichtfläche kann der Teil der Dichtfläche, welcher von der Kontaktstelle bzw. der Dichtstelle mit dem besagten Kern aussenseitig zum Durchflusskanal liegt, mit dem Spritzmaterial verbunden werden, so dass dieser Teil der Dichtfläche nicht in seinem Ursprungszustand verbleibt.

Vorzugsweise ist die Dichtfläche eine vorbestimmte bzw. determinierte Fläche, welche am Bauteil als Dichtfläche identifizierbar ist.

Vorzugsweise ist die Dichtfläche im Bereich von 0.01 bis 0.5 Millimeter oder im Bereich von 0.02 bis 0.45 Millimeter von der Innenwand abgesetzt. Durch diese abgesetzte Ausbildung wird sichergestellt, dass der Kern einen guten und vor allem einen definierten Kontakt mit der Dichtfläche eingehen kann.

Die Dichtfläche kann dabei Teil eines sich von der Innenwand weg erstreckenden Steges sein.

Vorzugsweise trifft die Dichtfläche, welche sich dem ersten Kanalabschnitt anschliesst, in einem Kreuzungsbereich auf die Dichtfläche, welche sich vom zweiten Kanalabschnitt weg erstreckt, auf.

Vorzugsweise umgibt die Dichtfläche den Durchbruch bezüglich des Durchflusskanals im Wesentlichen vollständig, so dass ein Eindringen von Spritzmaterial in den Durchflusskanal vollständig verhinderbar ist. Das heisst, dass bezüglich des Durchflusskanals eine Dichtwirkung bei der Herstellung des Einsatzes bereitgestellt wird, so dass ein Eindringen von Spritzmaterial in den Durchflusskanal verhindert werden kann.

Vorzugsweise ist im Bereich des Durchbruchs jeweils auf jeder Seite des Durchflusskanals eine Dichtfläche angeordnet ist. Das heisst, dass die Dichtflächen vorzugsweise bezüglich des Durchflusskanals gegenübereinander angeordnet sind.

Vorzugsweise sind die Dichtflächen bezüglich einer Symmetrieebene, die mittig durch den Durchbruch hindurch geht und sich durch die beiden Mittelachsen erstreckt, symmetrisch zueinander ausgebildet.

Vorzugsweise weist die Dichtfläche eine Breite auf, welche maximal 5% des Umfangs des Durchflusskanals entspricht. Als Breite wird die Ausdehnung der Dichtfläche quer zur jeweiligen Mittelachse verstanden.

Vorzugsweise ist die Breite der Dichtfläche über deren gesamte Länge konstant ausgebildet. Eine variable Breite wäre auch denkbar.

Vorzugsweise schliesst sich der Dichtfläche ausserhalb des Durchflusskanals eine Anspritzfläche an, welche bezüglich der Dichtfläche versetzt angeordnet ist, wobei durch die versetzte Anordnung ein Hohlraum geschaffen wird, in welchen Spritzmaterial bei der Herstellung des Einsatzes einfliessen kann. Die Anspritzfläche liegt bezüglich des Durchflusskanals gesehen ausserhalb des Durchflusskanals. Die Anspritzfläche liegt aber vorzugsweise derart, dass diese dem Durchflusskanal zugewandt ist.

Mit anderen Worten schliesst sich der Dichtfläche eine Anspritzfläche an, an welche der Einsatz angespritzt wird, wobei sich die Anspritzfläche bezüglich des Durchflusskanals nach aussen hin anschliesst und wobei die Anspritzfläche sich vorzugsweise von der gesamten Länge der Aussenkante der Dichtfläche bezüglich des Durchflusskanals nach aussen erstreckt.

Vorzugsweise erstreckt sich die Anspritzfläche entlang der bezüglich des Durchflusskanals aussenseitig liegenden Kante der Dichtfläche.

Die Gehäusewand umfasst aussenseitig sowie stirnseitig zum Durchbruch weitere Anspritzflächen, an welche Teile des Einsatzes angespritzt werden.

Vorzugsweise ist die Dichtfläche eine ebene bzw. eine plane Fläche. Alternativerweise ist die Dichtfläche konkav gerundet ausgebildet.

In einer ersten Ausführungsform stehen die beiden Mittelachsen winklig geneigt, insbesondere rechtwinklig, zueinander und die beiden Kanalabschnitte sind derart angeordnet, dass sich deren Mittelachsen schneiden. Im Bereich des Übergangs zwischen dem ersten Kanalabschnitt und dem zweiten Kanalabschnitt ist eine innere Übergangskante vom ersten Kanalabschnitt zum zweiten Kanalabschnitt gebildet. Die Übergangskante ist mit einer Rundung gerundet ausgebildet. Der Einsatz ist gegenüber der Übergangskante derart angeordnet, dass die Übergangskante mit der Rundung während der Herstellung des Fittings durch den Durchbruch, der vom Einsatz überdeckt wird, zugänglich ist.

Bei dieser ersten Ausführungsform handelt es sich um ein Winkelstück.

Die Dichtflächen erstrecken sich in dieser Ausführungsform ebenfalls winklig geneigt zueinander, wobei der Winkel zwischen den Dichtflächen gleich ist wie der Winkel zwischen den beiden Mittelachsen.

Vorzugsweise erstreckt sich die Dichtfläche in dieser ersten Ausführungsform im Wesentlichen tangential zur besagten Rundung vom jeweiligen Rundungsanfang weg.

In einer zweiten Ausführungsform stehen die beiden Mittelachsen kollinear zueinander. Weiter umfasst das Fitting einen dritten Kanalabschnitt, welcher sich entlang einer dritten Mittelachse erstreckt, wobei die dritte Mittelachse winklig geneigt, insbesondere rechtwinklig, zur ersten und zur zweiten Mittelachse verläuft. Im Bereich des Übergangs zwischen dem ersten Kanalabschnitt und dem dritten Kanalabschnitt ist eine erste innere Übergangskante vom ersten Kanalabschnitt zum dritten Kanalabschnitt gebildet, welche Übergangskante mit einer Rundung gerundet ausgebildet ist. Im Bereich des Übergangs zwischen dem zweiten Kanalabschnitt und dem dritten Kanalabschnitt ist eine weitere innere Übergangskante vom zweiten Kanalabschnitt zum dritten Kanalabschnitt gebildet, welche weitere Übergangskante mit einer Rundung gerundet ausgebildet ist. Der besagte Einsatz erstreckt sich mindestens von der Übergangskante zwischen dem ersten und dritten Kanalabschnitt bis hin zur Übergangskante zwischen dem zweiten und dritten Kanalabschnitt.

Vorzugsweise erstreckt sich die Dichtfläche in Richtung der ersten Mittelachse und der zweiten Mittelachse vom ersten Kanalabschnitt in den zweiten Kanalabschnitt hinein.

Vorzugsweise erstreckt sich die Dichtfläche in dieser zweiten Ausführungsform in Wesentlichen tangential zur besagten Rundung vom jeweiligen Rundungsanfang weg.

Vorzugsweise erstreckt sich der besagte Einsatz mindestens von der Übergangskante zwischen dem ersten und zweiten Kanalabschnitt bis hin zur weiteren Übergangskante zwischen dem zweiten und dritten Kanalabschnitt. Gleichermassen erstreckt sich die besagte Dichtfläche von der Übergangskante zwischen dem ersten und zweiten Kanalabschnitt bis hin zur weiteren Übergangskante zwischen dem zweiten und dritten Kanalabschnitt.

Die folgende Beschreibung einiger weiterer bevorzugter Merkmale bezieht sich sowohl auf die erste und/oder die zweite bevorzugte Ausführungsform bzw. auf alle zuvor beschriebenen Varianten des Fittings.

Der Durchbruch, welcher dann vom Einsatz vollständig überdeckt wird bzw. in welchen der Einsatz eingesetzt ist, stellt eine Öffnung oder Fenster bereit, durch welches im Zuge der Herstellung des Fittings, ein Werkzeug in den Durchflusskanal eingeführt werden kann, um die besagte Rundung zu formen. Der Durchbruch wird im Zuge der Herstellung dann mit dem besagten Einsatz überdeckt. Insofern ist der Durchbruch während der Herstellung vorhanden und wird ebenfalls während der Herstellung mit dem Einsatz überdeckt.

Die Bildung des Durchbruches mit der anschliessenden Verschliessung durch den Einsatz hat den Vorteil, dass insbesondere die Übergangskante, an welcher die Rundung liegt, während der Herstellung zugänglich ist, was die Designfreiheit massiv erhöht. Insbesondere kann die Rundung sehr einfach und vor allem wirtschaftlich geformt werden. Die Innenkontur ist einfach entformbar.

Die Anordnung des Einsatzes hat viele Vorteile. Die Rundung kann so ausgebildet werden, dass diese möglichst strömungsoptimiert ist. Weiter kann der Einsatz während des Spritzgiessens hergestellt werden, wodurch ein aufwändiges und vor allem nachträgliches Anschweissen von zusätzlichen Teilen entfällt.

Der Einsatz erstreckt sich vorzugsweise ausschliesslich über einen Teilbereich der Gehäusewand, nämlich nur so, dass die Rundung durch ein Spritzgusswerkzeug zugänglich ist. Der Einsatz erstreckt sich vorzugsweise ausschliesslich nur teilweise um die jeweilige Mittelachse bzw. die jeweiligen Mittelachsen herum, das heisst, dass ein vollständiges Umlaufen des Einsatzes um die Mittelachse nicht vorgesehen ist. Vorzugsweise ist der Einsatz so klein als möglich zu wählen, so dass er sich ausschliesslich derart erstreckt, dass die besagte Rundung bzw. die besagten Rundungen zugänglich sind.

Der Einsatz bildet einen Teil der Gehäusewand und verschliesst den für das Werkzeug vorgesehenen Durchbruch. Besonders bevorzugt weist der Einsatz mindestens im Bereich der Trennstelle zwischen Durchbruch und Einsatz eine Wandstärke auf, welche vorzugsweise der Wandstärke der benachbarten Bereiche der Gehäusewand entspricht. Der Einsatz wird vorzugsweise mit einem Spritzgiessverfahren in den Durchbruch eingespritzt und verbindet sich dabei mit der Gehäusewand.

Unabhängig von der Ausbildung mit zwei oder drei Kanalabschnitten ist es für die Form des Einsatzes bzw. des Durchbruches vorteilhaft, wenn die lichte Weite des Durchbruches derart ist, dass die Rundungen durch ein Werkzeug, welches den Durchbruch bildet und durch den Durchbruch bewegt wird, erreichbar sind.

Vorzugsweise erstreckt sich der erste Kanalabschnitt entlang der ersten Mittelachse gesehen bis hin zur Rundung zylindrisch mit im Wesentlichen konstantem Durchmesser. Der zylindrische Durchmesser geht dann in die Rundung über, wobei der Übergang durch einen Übergangspunkt definiert ist. Der Übergangspunkt ist ein geometrischer Ort auf einer Trennlinie des Übergangs vom zylindrischen Durchmesser in die Rundung, wobei der Übergangspunkt den Punkt auf der Trennlinie definiert, welcher von der zweiten Mittelachse am weitesten entfernt liegt. Der Einsatz erstreckt sich in Richtung der ersten Mittelachse vom zylindrischen Bereich, also im Wesentlichen vom Übergangspunkt, zur zweiten Mittelachse hin über die besagte Rundung hinweg. In Richtung der ersten Mittelachse gesehen weist der Einsatz also eine Länge auf, welche sich vom zylindrischen Bereich vorzugsweise bis hin zur zweiten Mittelachse oder - je nach Ausführung - über die zweite Mittelachse hinweg erstreckt. Alternativerweise erstreckt sich der Einsatz genau vom Übergangspunkt zwischen dem zylindrischen Bereich und der Rundung zur zweiten Mittelachse hin. In Richtung der ersten Mittelachse gesehen weist der Einsatz dann eine Länge auf, welche sich vom Übergangspunkt vorzugsweise bis hin zur zweiten Mittelachse oder über die zweite Mittelachse hinweg erstreckt.

Beim Fitting mit zwei Kanalabschnitten handelt es sich beispielsweise um einen Rohrbogen oder ein Winkelstück. Beim Fitting mit den drei Kanalabschnitten handelt es sich beispielsweise um ein T-Stück. Die Gehäusewand hat aussenseitig bei jedem der Kanalabschnitte die Form eines Anschlussstutzens. Folglich erstreckt sich jeder Kanalabschnitt innerhalb eines Anschlussstutzens, welcher durch die Gehäusewand bereitgestellt wird.

Bei einem Rohrbogen erstreckt sich der Einsatz auf der Bogenaussenseite vom Übergangspunkt zwischen dem zylindrischen Bereich des ersten Kanalabschnittes und der Rundung bis hin zum Übergangspunkt zwischen dem zylindrischen Bereich des dritten Kanalabschnittes und der Rundung. Auch hier kann sich der Einsatz leicht in den zylindrischen Bereich hinein erstrecken.

Bei einem T-Stück mit den drei Kanalabschnitten erstreckt sich der Einsatz vorzugsweise wie folgt: Der zweite Kanalabschnitt erstreckt sich entlang der zweiten Mittelachse gesehen bis hin zur Rundung zylindrisch mit im Wesentlichen konstantem Durchmesser. Der zylindrische Durchmesser geht dann in die Rundung über, wobei der Übergang durch einen Übergangspunkt definiert ist. Der Einsatz erstreckt sich in Richtung der zweiten Mittelachse vom zylindrischen Bereich zur dritten Mittelachse hin über die besagte Rundung hinweg. In Richtung der zweiten Mittelachse gesehen weist der Einsatz also eine Länge auf, welche sich vom zylindrischen Bereich vorzugsweise die dritte Mittelachse hinweg bis hin zum Übergangspunkt über im ersten Kanalabschnitt erstreckt. Der Einsatz kann sich über die besagten Übergangspunkte hinweg erstrecken. Alternativerweise erstreckt sich der Einsatz genau vom Übergangspunkt zwischen dem zylindrischen Bereich und der Rundung im zweiten Kanalabschnitt und demselben Übergangspunkt im ersten Kanalabschnitt.

Vorzugsweise erstreckt sich der Einsatz, insbesondere bei drei Kanalabschnitten, mindestens über die lichte Weite des dritten Kanalabschnittes bis über oder mindestens an den Rand der Rundung hinweg. Somit kann ein guter Zugang zum Übergangsbereich zwischen dem ersten Kanalabschnitt und dem dritten Kanalabschnitt bzw. zwischen dem zweiten Kanalabschnitt und dem dritten Kanalabschnitt geschaffen werden.

Der Einsatz erstreckt sich - in allen Ausführungen - besonders bevorzugt von Rundung zu Rundung. Der Einsatz überdeckt besonders bevorzugt gesehen im Wesentlichen die lichte Weite des dritten Kanalabschnittes bis an bzw. leicht über die Rundung, welche den Mündungsbereich vom ersten bzw. zweiten Kanalabschnitt in den dritten Kanalabschnitt umgibt.

Besonders bevorzugt ist genau ein einziger Einsatz vorhanden, welcher wie oben erwähnt einen Teil der Gehäusewand darstellt. Vorzugsweise nimmt der Einsatz bezüglich der Aussenfläche der Gehäusewand einen kleinen Teil von maximal einem Fünftel der gesamten Aussenfläche ein.

Die Gehäusewand und der Einsatz werden stoffschlüssig miteinander verbunden. Eine spätere Trennung zwischen Gehäusewand und Einsatz ist nicht vorgesehen. Es wird ein einstückiges Fitting bereitgestellt.

Die Gehäusewand und der Einsatz sind vorzugsweise aus demselben Kunststoff. Insbesondere aus derselben Farbe. Der Einsatz und die Gehäusewand können aber auch eine andere Farbe aufweisen. Beispielsweise können der Einsatz aus einem transparenten Kunststoff und die Gehäusewand aus einem opaken Kunststoff hergestellt sein.

Bei einem T-Stück erstreckt sich der Einsatz von einer Ebene, welche rechtwinklig zur dritten Mittelachse und durch die erste bzw. die zweite Mittelachse verläuft, bezüglich des dritten Kanalabschnittes weg, so dass der Einsatz gegenüber dem dritten Kanalabschnitt liegt.

Der Einsatz ist vorzugsweise schalenförmig ausgebildet. Bei einem T-Stück ist der Einsatz vorzugsweise als eine halbzylindrische Schale ausgebildet. Die halbzylindrische Schale erstreckt sich vorzugsweise um den halben Umfang des ersten und ggf. des zweiten Kanalabschnittes. Bei einem Rohrbogen weist die Schale die Form einer Teilschale der Aussenseite des Rohrbogens auf.

Vorzugsweise sind die Trennstellen zwischen der Gehäusewand und dem Einsatz als ebene oder gestufte Flächen ausgebildet. Die Flächen können dabei verschiedenartig orientiert sein und beispielsweise auch Hinterschnitte oder dergleichen aufweisen.

Die besagten Flächen der Trennstellen verlaufen vorzugsweise rechtwinklig oder parallel zu den Mittelachsen. Die Flächen können aber auch winklig geneigt zu den Mittelachsen verlaufen. Auch ist eine Kombination denkbar, beispielsweise können die Flächen der Trennstellen oder Teile der Trennflächen, rechtwinklig, parallel und winklig geneigt zu den besagten Mittelachsen verlaufen.

Vorzugsweise ist jeder der Kanalabschnitte aussenseitig mit einer Dichtkontur ausgebildet, auf welcher ein Rohr fluiddicht lagerbar ist. Die Dichtkontur ragt dabei in das Rohr ein und das Rohr wird gegen die Dichtkontur gepresst.

Der Radius der Rundung liegt vorzugsweise im Bereich von 20% bis 60%, insbesondere im Bereich von 30% bis 40%, des Innendurchmessers der jeweiligen Kanalabschnitte. Vorzugweise weisen alle Kanalabschnitte den gleichen Innendurchmesser auf.

Ein erfindungsgemäßes Spritzgiessverfahren zur Herstellung eines Fittings nach obiger Beschreibung ist dadurch gekennzeichnet,
dass in einem ersten Schritt die Gehäusewand ohne den Einsatz hergestellt wird, wobei pro Kanalabschnitt ein zylindrischer Kern bereitgestellt wird und wobei durch den Durchbruch, welcher vom Einsatz überdeckt wird, während der Herstellung ein zusätzlicher Kern zur Bereitstellung der Innenform des Durchflusskanals in den Durchflusskanal einragt, und
dass in einem zweiten Schritt mindestens ein Kern entlang des ersten und/oder des zweiten Kanalabschnittes in den Durchflusskanal bis in Bereich des Durchbruches eingeschoben wird, wobei der Kern derart in Kontakt mit der Dichtfläche kommt, dass der Durchflusskanal bezüglich des mit dem Einsatz anzuspritzenden Spritzmaterial dicht verschlossen ist, und wobei der Durchbruch mit dem Einsatz zugespritzt wird.
Bezüglich der Innenform wird insbesondere die besagte Rundung bei den Übergängen hergestellt.

Besonders bevorzugt werden die beiden Schritte in der gleichen Spritzgiessform ausgeführt. Die Form kann dabei vom gleichen Spritzaggregat oder von zwei verschiedenen Spritzaggregaten beschickt werden.

Beim Spritzgiessverfahren handelt es sich vorzugsweise um ein zweistufiges Spritzgiessverfahren.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Fittings gemäss einer ersten Ausführungsform;
- Fig. 2: eine teilweise geschnittene Ansicht des Fittings nach Figur 1;
- Fig. 3: eine Schnittdarstellung des Fittings mit eingeschobenem Kern;
- Fig. 4: die Schnittdarstellung nach Figur 3 ohne des Kerns;
- Fig. 5a/b/c: weitere Schnittansichten des Fittings ohne den Kern (Fig. 5a/5b) und mit dem Kern (Fig. 5c); und
- Fig. 6a/6b: perspektivische Ansichten eines Fittings gemäss einer zweiten Ausführungsform.

### BESCHREIBUNG BEVORZUGTER AUSFÜHRUNGSFORMEN

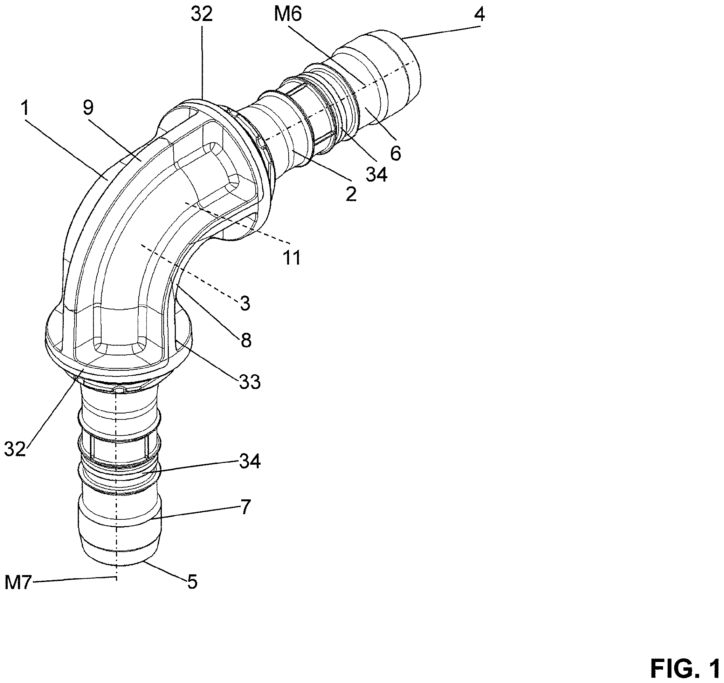

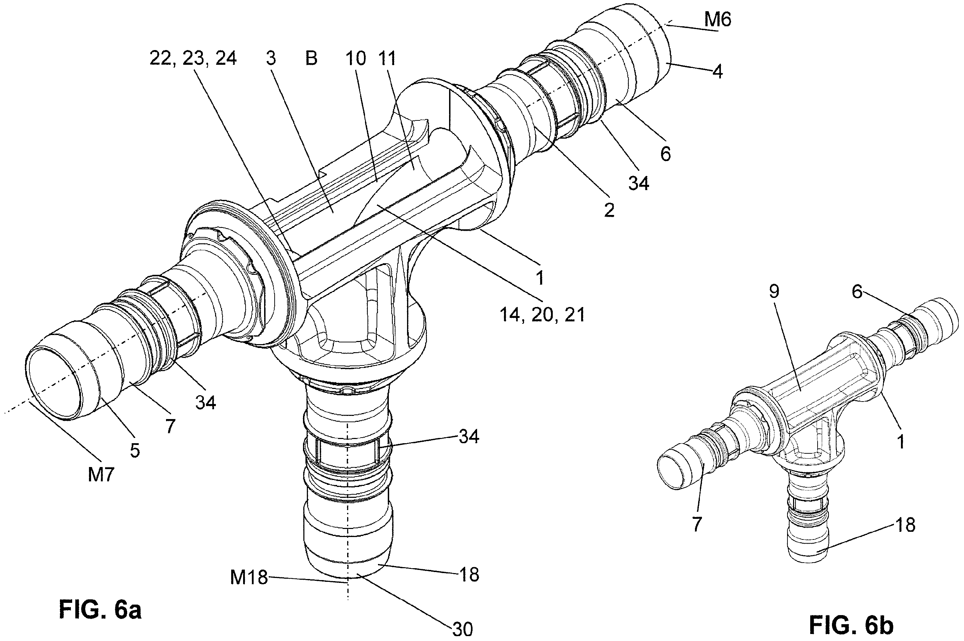

Die Figuren 1 bis 5 zeigen eine erste Ausführungsform eines Fittings in der Gestalt eines Winkelstückes und die Figuren 6a und 6b zeigen eine zweite Ausführungsform eines Fittings in der Gestalt eines T-Stückes.

Das Fitting 1 gemäss beiden Ausführungsformen umfasst eine Gehäusewand 2, die einen Durchflusskanal 3 begrenzt, welcher sich von einem Fittingeingang 4 zu einem Fittingausgang 5 erstreckt. Der Durchflusskanal 3 weist einen sich entlang einer Mittelachse M6 erstreckenden ersten Kanalabschnitt 6 und einen sich entlang einer zweiten Mittelachse M7 erstreckenden zweiten Kanalabschnitt 7 auf. Im Bereich des Überganges zwischen dem ersten Kanalabschnitt 6 und dem zweiten Kanalabschnitt 7 ist ein Einsatz in einem Durchbruch 11 durch die Gehäusewand 2 eingesetzt. Der Einsatz 9 ist stoffschlüssig mit der Gehäusewand 2 in Verbindung. Der Einsatz 9 überdeckt dabei den Durchbruch 11 im Wesentlichen vollständig.

In der ersten Ausführungsform stehen die beiden Mittelachsen M6, M7 winklig geneigt, hier rechtwinklig, zueinander. In der zweiten Ausführungsform stehen die beiden Mittelachsen, M6, M7 kollinear zueinander, wobei in der zweiten Ausführungsform noch ein dritter Kanalabschnitt 18 vorgesehen ist, welcher sich entlang einer dritten Mittelachse M18 erstreckt und winklig geneigt, hier rechtwinklig, zur ersten Mittelachse M6 und zur zweiten Mittelachse M7 steht. Der dritte Kanalabschnitt 18 weist einen weiteren Fittingausgang 30 auf.

Bei beiden Ausführungsformen ist eine Dichtfläche 10 angeordnet. Die Dichtfläche 10 arbeitet während der Herstellung des Einsatzes 9 mit mindestens einem Kern eines Spritzgiesswerkzeuges zusammen. Die Dichtfläche 10 erstreckt sich mindestens teilweise entlang des Durchbruchs 11 derart, dass während der Herstellung des Einsatzes 9 in Zusammenarbeit mit mindestens einem Kern eines Spritzgiesswerkzeuges ein Eindringen von Spritzmaterial in den Durchflusskanal 3 verhindert wird. Das heisst, der mindestens eine Kern eines Spritzgiesswerkzeuges schmiegt sich an die Dichtfläche 10 an, derart dass im Zusammenarbeit mit der Oberfläche des mindestens einem Kerns und der Dichtfläche 10 eine Dichtlinie bereitgestellt wird, so dass kein Spritzmaterial von aussen in den Durchflusskanal eindringen kann. Das heisst, das Spritzmaterial kann nicht von der Stelle, an welche der Einsatz 9 herzustellen ist, in das Innere des Durchflusskanals 3 eindringen. Dies weist den Vorteil auf, dass die Geometrie des Durchflusskanals 3 im Bereich, in welchem der Einsatz 9 zu liegen kommt bzw. in daran angrenzenden Bereichen, nicht negativ durch unkontrolliert einfliessendes Dichtmaterial beeinflusst wird. Der Einsatz 9 kann demnach ohne negative Beeinflussung des Durchflusskanals hergestellt werden.

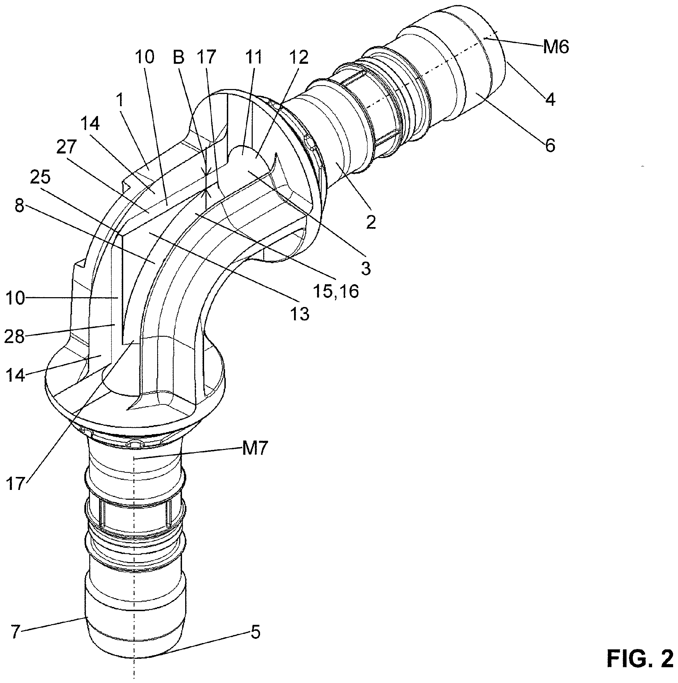

Anhand der Figuren 2 bis 5 wird nun die Ausgestaltung der Dichtfläche gemäss der ersten Ausführungsform genauer erläutert. Die Dichtfläche 10 setzt sich, wie von der Figur 2 ersichtlich, in Richtung der Mittelachse M6 bzw. M7 vom ersten Kanalabschnitt 6 bzw. vom zweiten Kanalabschnitt 7 fort. In der ersten Ausführungsform setzt sich vom ersten Kanalabschnitt 6 ein erster Abschnitt 27 der Dichtfläche 10 im Wesentlichen parallel zur Mittelachse M6 fort. Vom zweiten Kanalabschnitt 7 setzt sich ein weiterer Abschnitt 28 der Dichtfläche 10 ebenfalls im Wesentlichen parallel zur Mittelachse M7 fort. In einem Kreuzungsbereich 25 trifft der vom ersten Kanalabschnitt 6 fortlaufende Abschnitt und der vom zweiten Kanalabschnitt 7 sich erstreckende Abschnitt der Dichtfläche 10 aufeinander. Die Dichtfläche 10 erstreckt sich ohne Unterbruch vom ersten Kanalabschnitt 6 zum zweiten Kanalabschnitt 7. Da die beiden Kanalabschnitte 6, 7 in der ersten Ausführungsform winklig geneigt zueinander stehen, stehen auch die beiden Abschnitte 27, 28 der Dichtfläche 10 winklig geneigt zueinander.

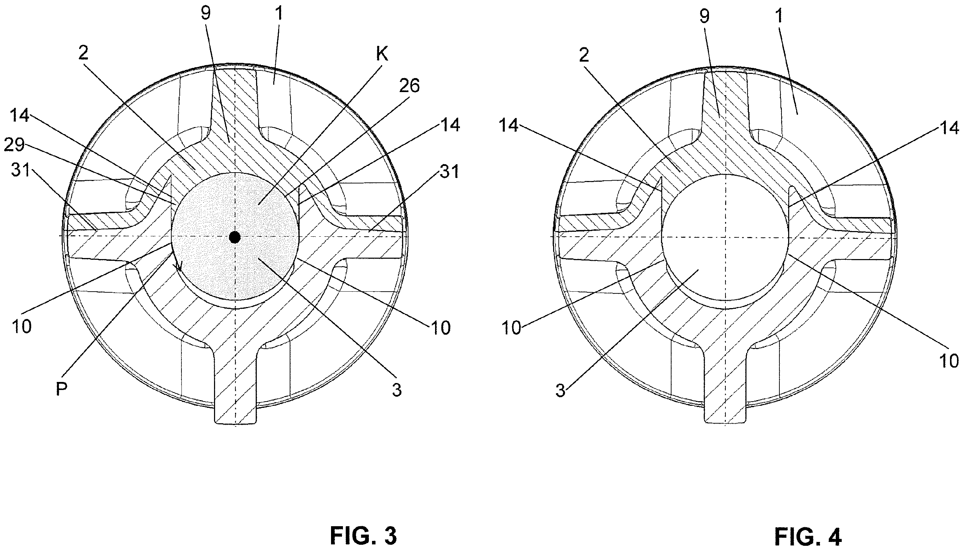

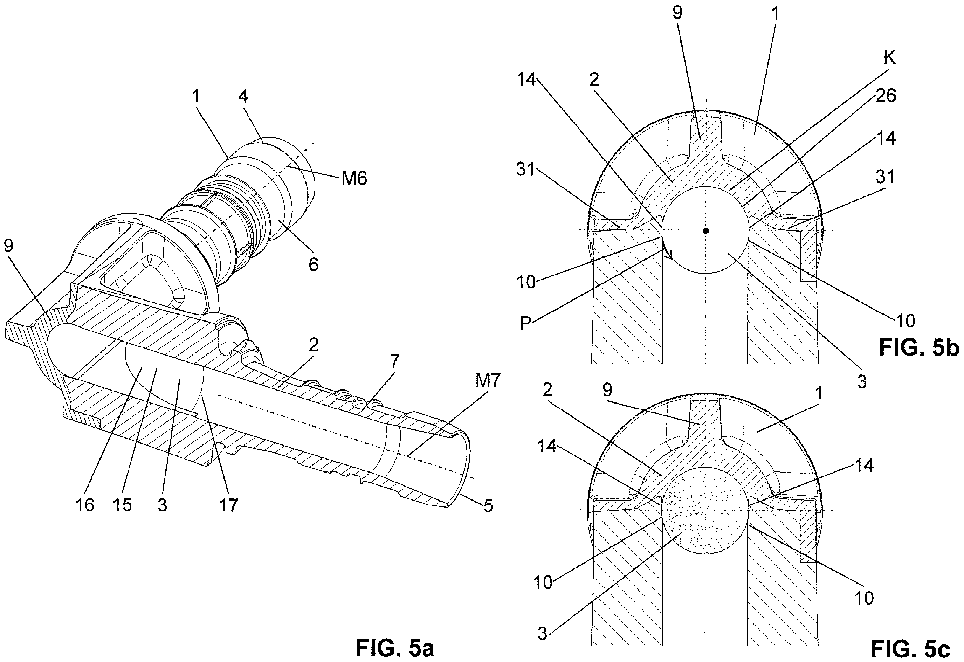

In der Figur 3 und auch in der Figur 5c werden Schnittdarstellungen gezeigt, in welchen der Kern K des Spritzgiesswerkezuges dargestellt wird. Der Kern K erstreckt sich dabei von den Kanalabschnitten 6, 7 in den Bereich, in welchem der Einsatz 9 geformt wird, also in den Bereich des Durchbruchs 11, hinein. Typischerweise erstreckt sich von jedem Kanalabschnitt 6, 7 her, je ein Kern K in den entsprechenden Bereich hinein. In der Figur 3 und 5c kann gut erkannt werden, wie sich die Aussenseite 26 des Kerns K an die Dichtfläche 10 anschmiegt und so ein verhindern des Eindringens von Spritzmaterials, mit welchem der Einsatz 9 hergestellt wird, verhindert werden kann. Das heisst, das Spitzmaterial kann nicht entlang des Pfeils P in den Durchflusskanal 3 eindringen.

In den Figuren 3 und 5c wird überdies der Einsatz 9 mit einer anderen Schraffur dargestellt als die restlichen Teile des Fittings. Es kann dabei auch gut erkannt werden, dass der Einsatz 9 während der Herstellung in einen Hohlraum 29 einfliesst.

Die Dichtfläche 10 schliesst sich, wie in der Figur 2 gezeigt, unmittelbar an die Innenwand 12 des jeweiligen Abschnittes des Durchflusskanals 3 an und bildet eine Fortsetzung der Innenwand 12 in den Durchbruch 11 hinein. Bezüglich des Umfangs gesehen setzt sich ein Teil der Oberfläche der Innenwand 12 der Kanalabschnitte 6 und 7 in den Bereich des Durchbruchs 11 fort.

Von den Figuren 6a und 6b wird die Ausbildung der Dichtfläche 10 gemäss der zweiten Ausführungsform gezeigt. Hier erstreckt sich die Dichtfläche 10 ebenfalls vom ersten Kanalabschnitt 6 sowie vom zweiten Kanalabschnitt 7 in den Bereich des Durchbruchs 11 hinein. Da die beiden Kanalabschnitt 6, 7 kollinear zueinander verlaufen, erstreckt sich der von dem ersten Kanalabschnitt 6 her führende Abschnitt 27 der Dichtfläche 10 sich ebenfalls kollinear zum Abschnitt 18 der Dichtfläche 10, welcher vom zweiten Kanalabschnitt 7 in den Durchbruch 11 hinein geführt wird. Das heisst, die Dichtfläche 10 weist gemäss der zweiten Ausführungsform nicht einen Kreuzungsbereich auf, wie dies bei der ersten Ausführungsform der Fall ist.

Mindestens einige Teile der Dichtfläche 10 verbleiben bei beiden Ausführungsformen nach dem Herstellen des Einsatzes 9 mindestens teilweise im Ursprungszustand. Das heisst, die Dichtfläche 10 ist auch nach der Fertigung des Einsatzes 9 mindestens teilweise noch erkennbar. Typischerweise bleiben die Teile der Dichtfläche 10 im Ursprungszustand, welche bezüglich der Dichtlinie zwischen dem Kern K und der Dichtfläche 10 im Inneren des Durchflusskanals 3 liegen. Die anderen Teile der Dichtfläche 10, welche bezüglich der Dichtlinie zwischen dem Kern K und der Dichtfläche 10 ausserhalb des Durchflusskanals 3 liegen, verbleiben nicht im Ursprungszustand, weil hier entsprechendes Spritzmaterial angespritzt wird.

Von der Innenwand 13, welche die Innenwand 13 des Durchflusskanals 3 im Bereich des Übergangs 8 ist, ist die Dichtfläche 10 bei beiden Ausführungsformen abgesetzt ausgebildet. Das heisst, dass die Dichtfläche 10 bezüglich der besagten Innenwand 13 erhaben ausgebildet ist bzw. dass die Dichtfläche 10 von der Innenwand 13 erhöht ausgebildet ist bzw. einen Absatz von der Innenwand 13 bildet. Vorzugsweise ist die Dichtfläche 10 im Bereich von 0.01 bis 0.5 Millimeter oder im Bereich von 0.02 bis 0.45 Millimeter von der Innenwand 13 abgesetzt. Diese Absetzung hat den Vorteil, dass eine determinierte Dichtfläche geschaffen wird.

Die Dichtfläche 10 umgibt den Durchbruch 11 bezüglich des Durchflusskanals 3 im Wesentlichen vollständig. Bei beiden Ausführungsformen sind jeweils zwei Dichtflächen 10 bezüglich des Durchflusskanals 3 gegenübereinander angeordnet. Im Bereich des Durchbruchs 11 ist also auf jeder Seite des Durchflusskanals 3 eine Dichtfläche 10 angeordnet. Ein Eindringen von Spritzmaterial in den Durchflusskanal 3 ist durch die besagte Anordnung verhinderbar, weil eine Dichtlinie entlang der Innenwand 13 des Durchflusskanals 3 im Bereich des Durchbruches 11 bereitstellbar ist.

Die Dichtfläche 10 weist vorzugsweise eine Breite B auf, welche maximal 5 % des Umfangs des Durchflusskanals 3 entspricht. Die Breite B ist dabei ein Mass, welches sich im Wesentlichen quer zur jeweiligen Mittelachse M6, M7 erstreckt.

Die Dichtfläche 10 ist in hier in beiden Ausführungsformen stegartig ausgebildet.

Der Dichtfläche 10 schliesst sich ausserhalb des Durchflusskanals 3 eine Anspritzfläche 14 an. Die Anspritzfläche 14 ist bezüglich der Dichtfläche 10 versetzt angeordnet. Das heisst, die Dichtfläche 10 setzt sich von der Anspritzfläche 14 ab. Es wird dabei durch diese versetzte Anordnung ein Hohlraum 29 geschaffen, in welchem Spritzmaterial bei der Herstellung des Einsatzes 9 einfliessen kann. Dieser Hohlraum wird in der Figur 3 entsprechend gezeigt. Gleichermassen wird auch bei der zweiten Ausführungsform ein entsprechender Hohlraum 29 geschaffen.

Eine weitere Anspritzfläche mit dem Bezugszeichen 31 ist aussenseitig um den Durchbruch 11 angeordnet. In der gezeigten Ausführungsform ist die Anspritzfläche Teil eines Anspritzflansches 32, der sich stirnseitig vom Durchbruch nach aussen erstreckt, und Teil eines sich seitlich zum Durchbruch 11 erstreckenden Anspritzelementes 33.

Die Dichtfläche 10 ist bezüglich ihrer Oberfläche eben oder plan ausgebildet. Das heisst, die Dichtfläche 10 kann eine plane beziehungsweise eine ebene Fläche sein. Alternativerweise kann die Dichtfläche 10 auch konkav gerundet ausgebildet sein, wobei der Radius der Rundung vorzugsweise im Wesentlichen dem Radius des Kern entspricht.

Wie bereits erläutert, stehen die beiden Mittelachsen, M6, M7 in der ersten Ausführungsform winklig geneigt zueinander. Insbesondere stehen die beiden Mittelachsen, M6, M7 rechtwinklig zueinander und die beiden Kanalabschnitte, 6, 7 sind ebenfalls rechtwinklig zueinander orientiert. Die beiden Kanalabschnitte sind beide derart angeordnet, dass sich deren Mittelachsen M6, M7 schneiden. Im Bereich des Übergangs 8 zwischen dem ersten Kanalabschnitt 6 und dem zweiten Kanalabschnitt 7 wird eine innere Übergangskante 15 vom ersten Kanalabschnitt 6 zum zweiten Kanalabschnitt 7 gebildet. Die innere Übergangskante 15 ist mit einer Rundung 16 ausgebildet. Die Rundung 16 weist den Vorteil auf, dass der Übergang zwischen dem ersten Kanalabschnitt 6 und dem zweiten Kanalabschnitt 7 möglichst strömungsoptimiert ausgebildet werden kann. Der Einsatz 9 ist gegenüber der Übergangskante 15 derart angeordnet, dass die Übergangskante 15 mit der Rundung 16 während der Herstellung des Fittings durch den Durchbruch 11, der vom Einsatz 9 überdeckt wird, zugänglich ist.

In den Figuren 6a und 6b wird die zweite Ausführungsform in der Form des T-Stückes gezeigt. Wie bereits erwähnt erstrecken sich hier die beiden Mittelachsen M6, M7 des ersten Kanalabschnittes 6 und des zweiten Kanalabschnittes 7 kollinear zueinander. Des weiteren ist ein dritter Kanalabschnitt 18 angeordnet, welcher sich entlang einer dritten Mittelachse M18 erstreckt. Die dritte Mittelachse M18 steht winklig geneigt, insbesondere rechtwinklig zur ersten und zweiten Mittelachse M6, M7. Die drei Mittelachsen, M6, M7 und M18 schneiden sich an einem gemeinsamen Ort.

Im Bereich des Übergangs 19 zwischen dem ersten Kanalabschnitt 6 und dem dritten Kanalabschnitt 18 ist eine erste innere Übergangskante 20 angeordnet. Die Übergangskante 20 ist mit einer Rundung 21 ausgebildet. Im Bereich des Übergangs 22 zwischen dem zweiten Kanalabschnitt 7 und dem dritten Kanalabschnitt 18 ist eine weitere innere Übergangskante 23 angeordnet. Die Übergangskante 23 ist mit einer Rundung 24 ausgebildet. Der besagte Einsatz 11 erstreckt sich von der Übergangskante 20 zwischen dem ersten Kanalabschnitt 6 und dem dritten Kanalabschnitt 18 bis hin zur Übergangskante 23 zwischen dem zweiten Kanalabschnitt 7 und dem dritten Kanalabschnitt 18. Die Dichtfläche 10 erstreckt sich in Richtung der ersten Mittelachse M6 und der zweiten Mittelachse M7 vom ersten Kanalabschnitt in den zweiten Kanalabschnitt hinein. Die Dichtfläche 10 dichtet also im Wesentlichen den Übergangsbereich zwischen den drei Kanalabschnitten von dem Bereich, in welchem der Einsatz 9 zu liegen kommt, in Richtung des Durchflusskanals 3 ab.

Bei beiden Ausführungsformen erstreckt sich die Dichtfläche 10 tangential zur Rundung 16, 21, 24 vom jeweiligen Rundungsanfang 17 weg.

Beide Ausführungsformen weisen vorzugsweise eine Dichtstruktur 34 auf, welche aussenseitig angeordnet ist.

Ein Spritzgiessverfahren zur Herstellung eines Fittings nach obiger Beschreibung umfasst folgende Schritte:
In einem ersten Schritt wird die Gehäusewand 2 ohne den Einsatz 11 hergestellt, wobei pro Kanalabschnitt 6, 7, 18 ein zylindrischer Kern bereitgestellt wird und wobei durch den Durchbruch 11, welcher vom Einsatz 9 überdeckt wird, ein zusätzlicher Kern, einragt. Der zusätzliche Kern dient der Bereitstellung der Innenform des Durchflusskanals 3, insbesondere von der besagten Rundung 10.

In einem zweiten Schritt wird mindestens ein Kern K entlang des ersten und/oder des zweiten Kanalabschnittes 6, 7 in den Durchflusskanal 3 bis in Bereich des Durchbruches 12 eingeschoben, wobei der Kern derart in Kontakt mit der Dichtfläche 10 kommt, dass der Durchflusskanal 3 bezüglich des mit dem Einsatz 9 anzuspritzenden Spritzmaterial dicht verschlossen ist, und wobei der Durchbruch 12 mit dem Einsatz 11 zugespritzt wird.

**BEZUGSZEICHENLISTE**

| | | | |
|---|---|---|---|
| 1 | Fitting | 30 | Fittingausgang |
| 2 | Gehäusewand | 31 | weitere Anspritzfläche |
| 3 | Durchflusskanal | 32 | Anspritzflansch |
| 4 | Fittingeingang | 33 | Anspritzelement |
| 5 | Fittingausgang | 34 | Dichtstruktur |
| 6 | erster Kanalabschnitt | | |
| 7 | zweiter Kanalabschnitt | B | Breite |
| 8 | Übergang | K | Kern |
| 9 | Einsatz | P | Pfeil |
| 10 | Dichtfläche | | |
| 11 | Durchbruch | | |
| 12 | Innenwand | | |
| 13 | Innenwand | | |
| 14 | Anspritzfläche | | |
| 15 | innere Übergangskante | | |
| 16 | Rundung | | |
| 17 | Rundungsanfang | | |
| 18 | dritter Kanalabschnitt | | |
| 19 | Übergang | | |
| 20 | erste Übergangskante | | |
| 21 | Rundung | | |
| 22 | Übergang | | |
| 23 | weitere Übergangskante | | |
| 24 | Rundung | | |
| 25 | Kreuzungsbereich | | |
| 26 | Aussenseite | | |
| 27 | Abschnitt | | |
| 28 | Abschnitt | | |
| 29 | Hohlraum | | |

## Patentansprüche

1. Fitting (1), insbesondere aus Kunststoff, umfassend
eine Gehäusewand (2), die einen Durchflusskanal (3) begrenzt, welcher sich von einem Fittingeingang (4) zu einem Fittingausgang (5) erstreckt,
wobei der Durchflusskanal (3) einen sich entlang einer ersten Mittelachse (M6) erstreckenden ersten Kanalabschnitt (6) und einen sich entlang einer zweiten Mittelachse (M7) erstreckenden zweiten Kanalabschnitt (7) umfasst,
wobei im Bereich des Übergangs (8) zwischen dem ersten Kanalabschnitt (6) und dem zweiten Kanalabschnitt (7) ein Einsatz (9) in einen Durchbruch (11) durch die Gehäusewand (2) eingesetzt ist, welcher Einsatz (9) stoffschlüssig mit der Gehäusewand (2) in Verbindung steht,
wobei eine Dichtfläche (10) sich mindestens teilweise entlang des Durchbruchs (11) erstreckt, derart, dass während der Herstellung des Einsatzes (9) in Zusammenarbeit mit mindestens einem Kern eines Spritzgiesswerkzeuges ein Eindringen vom Spritzmaterial in den Durchflusskanal (3) verhinderbar ist, **dadurch gekennzeichnet, dass** die Dichtfläche (10) von der Innenwand (13) des Durchflusskanals (3) abgesetzt ist.

2. Fitting (1) nach Anspruch 1, **dadurch gekennzeichnet, dass** die Dichtfläche (10) sich in Richtung der Mittelachse (M6, M7) des jeweiligen Abschnittes (6, 7) fortsetzt.

3. Fitting (1) nach Anspruch 2, **dadurch gekennzeichnet, dass** sich die Dichtfläche (10) unmittelbar an die Innenwand (12) des jeweiligen Abschnittes (6, 7) anschliesst und eine Fortsetzung der Innenwand (12) im Bereich des Durchbruchs (11) bildet.

4. Fitting (1) nach einem der vorhergehenden Ansprüche, **dadurch gekennzeichnet, dass** die Dichtfläche (10) nach dem Herstellen des Einsatzes (9) mindestens teilweise im Ursprungszustand verbleibt.

5. Fitting (1) nach einem der vorhergehenden Ansprüche, **dadurch gekennzeichnet, dass** die Dichtfläche (10) im Bereich von 0.01 bis 0.5 Millimeter oder im Bereich von 0.02 bis 0.45 Millimeter von der Innenwand (13) abgesetzt ist.

6. Fitting (1) nach einem der vorhergehenden Ansprüchen, **dadurch gekennzeichnet, dass** die Dichtfläche (10), welche sich dem ersten Kanalabschnitt (6) anschliesst, in einem Kreuzungsbereich (25) auf die Dichtfläche (10), welche sich vom zweiten Kanalabschnitt (7) weg erstreckt, auftrifft.

7. Fitting (1) nach einem der vorhergehenden Ansprüche, **dadurch gekennzeichnet, dass** die Dichtfläche (10) den Durchbruch (11) bezüglich des Durchflusskanals (3) im Wesentlichen vollständig umgibt, so dass ein Eindringen von Spritzmaterial in den Durchflusskanal (3) vollständig verhinderbar ist.

8. Fitting (1) nach einem der vorhergehenden Ansprüche, **dadurch gekennzeichnet, dass** im Bereich des Durchbruchs (11) jeweils auf jeder Seite des Durchflusskanals (3) eine Dichtfläche (10) angeordnet ist und/oder dass die Dichtfläche (10) eine Breite (B) aufweist, welche maximal 5% des Umfangs des Durchflusskanals (3) entspricht..

9. Fitting (1) nach einem der vorhergehenden Ansprüche, **dadurch gekennzeichnet, dass** sich der Dichtfläche (10) ausserhalb des Durchflusskanals (3) eine Anspritzfläche (14) anschliesst, welche bezüglich der Dichtfläche (10) versetzt angeordnet ist, wobei durch die versetzte Anordnung ein Hohlraum (29) geschaffen wird, in welchen Spritzmaterial bei der Herstellung des Einsatzes (9) einfliessen kann.

10. Fitting (1) nach einem der vorhergehenden Ansprüche, **dadurch gekennzeichnet, dass** die Dichtfläche (10) eine ebene bzw. eine plane Fläche ist; oder dass die Dichtfläche (10) konkav gerundet ausgebildet ist.

11. Fitting (1) nach einem der vorhergehenden Ansprüche, **dadurch gekennzeichnet, dass**
die beiden Mittelachsen (M6, M7) winklig geneigt, insbesondere rechtwinklig, zueinander stehen und die beiden Kanalabschnitte (6, 7) derart angeordnet sind, dass sich deren Mittelachsen (M6, M7) schneiden und
dass im Bereich des Übergangs (8) zwischen dem ersten Kanalabschnitt (6) und dem zweiten Kanalabschnitt (7) eine innere Übergangskante (15) vom ersten Kanalabschnitt (6) zum zweiten Kanalabschnitt (7) gebildet ist, welche Übergangskante (15) mit einer Rundung (16) gerundet ausgebildet ist,
wobei der Einsatz (9) gegenüber der Übergangskante (15) derart angeordnet ist, dass die Übergangskante (15) mit der Rundung (16) während der Herstellung des Fittings durch den Durchbruch (11), der vom Einsatz (9) überdeckt wird, zugänglich ist.

12. Fitting (1) nach einem der vorhergehenden Ansprüche 1 bis 10, **dadurch gekennzeichnet, dass**
die beiden Mittelachsen (M6, M7) kollinear zueinander stehen und
dass das Fitting (1) einen dritten Kanalabschnitt (18) umfasst, welcher sich entlang einer dritten Mittelachse (M18) erstreckt, wobei die dritte Mittelachse (M18) winklig geneigt, insbesondere rechtwinklig, zur ersten und zur zweiten Mittelachse (M6, M7) verläuft,
wobei im Bereich des Übergangs (19) zwischen dem ersten Kanalabschnitt (6) und dem dritten Kanalabschnitt (18) eine erste innere Übergangskante (20) vom ersten Kanalabschnitt (6) zum dritten Kanalabschnitt (18) gebildet ist, welche Übergangskante (20) mit einer Rundung (21) gerundet ausgebildet ist,
wobei im Bereich des Übergangs (22) zwischen dem zweiten Kanalabschnitt (7) und dem dritten Kanalabschnitt (18) eine weitere innere Übergangskante (23) vom zweiten Kanalabschnitt (7) zum dritten Kanalabschnitt (18) gebildet ist, welche weitere Übergangskante (23) mit einer Rundung (24) gerundet ausgebildet ist,
und wobei sich der besagte Einsatz (11) mindestens von der Übergangskante (20) zwischen dem ersten und dritten Kanalabschnitt (6, 7) bis hin zur Übergangskante (23) zwischen dem zweiten und dritten Kanalabschnitt (7, 18) erstreckt.

13. Fitting nach Anspruch 12, **dadurch gekennzeichnet, dass** sich die Dichtfläche in Richtung der ersten Mittelachse und der zweiten Mittelachse vom ersten Kanalabschnitt in den zweiten Kanalabschnitt hinein erstreckt.

14. Fitting (1) nach einem der Ansprüche 11 bis 13, **dadurch gekennzeichnet, dass** sich die Dichtfläche (10) tangential zur Rundung (16, 21, 24) vom jeweiligen Rundungsanfang (17) sich wegerstreckt.

15. Spritzgiessverfahren zur Herstellung eines Fittings (1) nach einem der vorhergehenden Ansprüche, **dadurch gekennzeichnet,**
**dass** in einem ersten Schritt die Gehäusewand (2) ohne den Einsatz (11) hergestellt wird, wobei pro Kanalabschnitt (6, 7, 18) ein zylindrischer Kern bereitgestellt wird und wobei durch den Durchbruch (11), welcher vom Einsatz (9) überdeckt wird, ein zusätzlicher Kern zur Bereitstellung der Innenform des Durchflusskanals (3) in den Durchflusskanal (3) einragt, und
**dass** in einem zweiten Schritt mindestens ein Kern (K) entlang des ersten und/oder des zweiten Kanalabschnittes (6, 7) in den Durchflusskanal (3) bis in Bereich des Durchbruches (12) eingeschoben wird, wobei der Kern derart in Kontakt mit der Dichtfläche (10) kommt, dass der Durchflusskanal (3) bezüglich des mit dem Einsatz (9) anzuspritzenden Spritzmaterial dicht verschlossen ist, und wobei der Durchbruch (12) mit dem Einsatz (11) zugespritzt wird.

16. Spritzgiessverfahren nach Anspruch 15, **dadurch gekennzeichnet, dass** die beiden Schritte in der gleichen Spritzgiessform ausgeführt werden.

## Claims

1. Fitting (1), especially of plastics, comprising
a housing wall (2) delimiting a flow through channel (3), which extends from a fitting inlet (4) to a fitting outlet (5),
wherein the flow through channel (3) comprises a first channel section (6) extending along a first center axis (M6) and a second channel section (7) extending along a second center axis (M7), wherein in the region of the transition (8) between the first channel section (6) and the second channel section (7) an insert (9) is inserted in a breakthrough (11) through the housing wall (2), said insert (9) being connected to the housing wall (2) by an adhesive bond,
wherein a sealing surface (10) extends at least partially along the breakthrough (11), such that during the manufacture of the insert (9) in cooperation with at least one core of an injection molding tool an intrusion of the injection material into the breakthrough channel (3) can be prevented, **characterized in that** the sealing surface (10) is offset from the interior wall (13) of the flow through channel (3).

2. Fitting (1) according to claim 1, **characterized in that** the sealing surface (10) continues in the direction of the center axis (M6, M7) of the corresponding section (6, 7).

3. Fitting (1) according to claim 2, **characterized in that** the sealing surface (10) immediately adjoins the interior wall (12) of the corresponding section (6, 7) and forms a continuation of the interior wall (12) in the region of the breakthrough (11).

4. Fitting (1) according to one of the preceding claims, **characterized in that** the sealing surface (10) remains at least partially in the original state after the manufacture of the insert (9).

5. Fitting (1) according to one of the preceding claims, **characterized in that** the sealing surface (10) is offset by in the range of 0.01 to 0.5 millimeters or in the range of 0.02 to 0.45 millimeters from the interior wall (13).

6. Fitting (1) according to one of the preceding claims, **characterized in that** the sealing surface (10) which adjoins the first channel section (6) makes contact in an intersecting region (25) with the sealing surface (10) extending away from the second channel section (7).

7. Fitting (1) according to one of the preceding claims, **characterized in that** the sealing surface (10) essentially completely surrounds the breakthrough (11) with respect to the flow through channel (3), such that an intrusion of injection material into the flow through channel (3) can be entirely prevented.

8. Fitting (1) according to one of the preceding claims, **characterized in that** in the region of the breakthrough (11) on each side of the flow through channel (3) a sealing surface (10) is arranged and/or that the sealing surface (10) comprises a width (B) which corresponds to a maximum of 5% of the circumference of the flow through channel.

9. Fitting (9) according to one of the preceding claims, **characterized in that** an injection surface (14) adjoins the sealing surface (10) on the exterior of the flow through channel (3), the injection surface (14) being arranged offset with respect to the sealing surface (10), wherein by the offset arrangement a cavity (29) is created, into which injection material can flow during the manufacture of the insert (9).

10. Fitting (1) according to one of the preceding claims, **characterized in that** the sealing surface (10) is an even or planar surface, respectively; or that the sealing surface (10) is rounded in a concave manner.

11. Fitting (1) according to one of the preceding claims, **characterized in that** the two center axes (M6, M7) are arranged at an angularly inclined manner, particularly at right angles, with respect to each other, and that the two channel sections (6, 7) are arranged such that their center axes (M6, M7) intersect, and that in the region of the transition (8) between the first channel section (6) and the second channel section (7) an interior transition edge (15) is formed from the first channel section (6) to the second channel section (7), said transition edge (15) being formed with a curvature (16) in a rounded manner,
wherein the insert (9) is arranged with respect to the transition edge (15) such that the transition edge (15) with the curvature (16) is accessible, during the manufacture of the fitting (9) through the breakthrough (11) which is covered by the insert (9).

12. Fitting (1) according to one of claims 1-10, **characterized in that**
the two center axes (M6, M7) are arranged collinear to each other and
that the fitting (1) comprises a third channel section (18) which extends along a third center axis (M18), wherein the third center axis (M18) runs at an angularly inclined manner, particularly at right angles, to the first and to the second center axis (M6, M7),
wherein in the region of the transition (19) between the first channel section (6) and the third channel section (18) a first interior transition edge (20) is formed from the first channel section (6) to the third channel section (18), said transition edge (20) being formed with a curvature (21) in a rounded manner,
wherein in the region of the transition (22) between the second channel section (7) and the third channel section (18) a further interior transition edge (23) is formed from the first channel section (7) to the third channel section (18), said further transition edge (23) being formed with a curvature (24) in a rounded manner,
and wherein said insert (11) extends at least from the transition edge (20) between the first and third channel section (6, 7) to the transition edge (23) between the second and third channel section (7, 18).

13. Fitting according to claim 12, **characterized in that** the sealing surface extends in the direction of the first center axis and the second center axis from the first channel section into the second channel section.

14. Fitting (1) according to one of claims 11 to 13, **characterized in that** the sealing surface (10) extends away from the corresponding beginning (17) of the curvature tangentially to the curvature (16, 21, 24).

15. Method of injection molding for the manufacture of a fitting (1) according to one of the preceding claims, **characterized in**
**that** in a first step, the housing wall (2) is produced without the insert (11), wherein per channel section (6, 7, 18), one cylindrical core is provided and wherein an additional core for the provision of the interior form of the flow through channel (3) protrudes through the breakthrough (11) which is covered by the insert (9), into the flow through channel (3), and
**that** in a second step, at least one core (K) is inserted into the flow through channel (3) along the first and/or the second channel section (6, 7) until it reaches the region of the breakthrough (12), wherein the core comes into contact with the sealing surface (10) such that the flow through channel (3) is tightly closed with respect to the injection material to be injection molded with the insert (9), and wherein the breakthrough (12) is closed with the insert (11) by injection molding.

16. Method of injection molding according to claim 15, **characterized in that** the two steps are carried out in the same injection mold.

## Revendications

1. Raccord (1), en particulier en matière plastique, comprenant
une paroi de boîtier (2), qui délimite un canal d'écoulement (3), qui s'étend d'une entrée de raccord (4) à une sortie de raccord (5),
dans lequel le canal d'écoulement (3) comprend une première section de canal (6) s'étendant le long d'un premier axe central (M6) et une deuxième section de canal (7) s'étendant le long d'un deuxième axe central (M7),
dans lequel dans la zone de la transition (8) entre la première section de canal (6) et la deuxième section de canal (7), un insert (9) est inséré dans une percée (11) à travers la paroi du boîtier (2), lequel insert (9) est relié de manière cohésive à la paroi du boîtier (2),
dans lequel une surface d'étanchéité (10) s'étend au moins partiellement le long de la percée (11), de telle sorte que, pendant la fabrication de l'insert (9), en coopération avec au moins un noyau d'un outil de moulage par injection, la pénétration du matériau d'injection dans le canal d'écoulement (3) peut être empêchée, **caractérisé en ce que** la surface d'étanchéité (10) est décalée de la paroi intérieure (13) du canal d'écoulement (3)

2. Raccord (1) selon la revendication 1, **caractérisé en ce que** la surface d'étanchéité (10) se poursuit dans la direction de l'axe central (M6, M7) de la section respective (6, 7).

3. Raccord (1) selon la revendication 2, **caractérisé en ce que** la surface d'étanchéité (10) est directement contiguë à la paroi intérieure (12) de la section respective (6, 7) et forme un prolongement de la paroi intérieure (12) dans la zone de la percée (11).

4. Raccord (1) selon l'une des revendications précédentes, **caractérisé en ce que** la surface d'étanchéité (10) reste au moins partiellement dans son état d'origine après la fabrication de l'insert (9).

5. Raccord (1) selon l'une des revendications précédentes, **caractérisé en ce que** la surface d'étanchéité (10) est décalée de la paroi intérieure (13) du canal d'écoulement (3), dans la plage de 0,01 à 0,5 millimètre ou dans la plage de 0,02 à 0,45 millimètre.

6. Raccord (1) selon l'une des revendications précédentes, **caractérisé en ce que** la surface d'étanchéité (10), qui jouxte la première section de canal (6), rencontre la surface d'étanchéité (10), qui s'étend à distance de la deuxième section de canal (7), dans une zone de croisement (25).

7. Raccord (1) selon l'une des revendications précédentes, **caractérisé en ce que** la surface d'étanchéité (10) entoure essentiellement complètement la percée (11) par rapport au canal d'écoulement (3), de sorte que la pénétration du produit d'injection dans le canal d'écoulement (3) peut être complètement empêchée.

8. Raccord (1) selon l'une des revendications précédentes, **caractérisé en ce que** une surface d'étanchéité (10) est disposée dans la zone de la percée (11) respectivement de chaque côté du canal d'écoulement (3) et / ou **en ce que** la surface d'étanchéité (10) présente une largeur (B) qui correspond au maximum à 5% de la circonférence du canal d'écoulement (3).

9. Raccord (1) selon l'une des revendications précédentes, **caractérisé en ce que** la surface d'étanchéité (10) est contiguë à l'extérieur du canal d'écoulement (3) à une surface d'injection (14), qui est disposée de manière décalée par rapport à la surface d'étanchéité (10), selon quoi une cavité (29) est créée par l'agencement décalé, dans laquelle le matériau d'injection peut entrer lors de la production de l'insert (9).

10. Raccord (1) selon l'une des revendications précédentes, **caractérisé en ce que** la surface d'étanchéité (10) est une surface plane ou plate; ou que la surface d'étanchéité (10) est conçue arrondie de manière concave.

11. Raccord (1) selon l'une des revendications précédentes, **caractérisé en ce que**
les deux axes centraux (M6, M7) sont inclinés à un angle, en particulier à angle droit, l'un par rapport à l'autre et **en ce que** les deux sections de canal (6, 7) sont disposées de telle sorte que leurs axes centraux (M6, M7) se coupent et
**en ce que** dans la zone de transition (8) entre la première section de canal (6) et la deuxième section de canal (7), un bord de transition intérieur (15) est formé de la première section de canal (6) à la deuxième section de canal (7), lequel bord de transition (15) est conçu de manière arrondie avec un arrondi (16),
dans lequel l'insert (9) est disposé en face du bord de transition (15) de telle sorte que le bord de transition (15) avec l'arrondi (16) est accessible lors de la fabrication du raccord à travers la percée (11), qui est recouverte par l'insert (9).

12. Raccord (1) selon l'une des revendications précédentes 1 à 10, **caractérisé en ce que**
les deux axes centraux (M6, M7) sont colinéaires l'un par rapport à l'autre et
**en ce que** le raccord (1) comprend une troisième section de canal (18), qui s'étend le long d'un troisième axe central (M18), le troisième axe central (M18) étant incliné d'un angle, en particulier à angle droit, par rapport aux premier et deuxième axes centraux (M6, M7),
dans lequel, dans la zone de la transition (19) entre la première section de canal (6) et la troisième section de canal (18), un premier bord de transition intérieur (20) est formé de la première section de canal (6) à la troisième section de canal (18), lequel bord de transition (20) est conçu de manière arrondie avec un arrondi (21),
dans lequel, dans la zone de la transition (22) entre la deuxième section de canal (7) et la troisième section de canal (18), un autre bord de transition intérieur (23) est formé de la deuxième section de canal (7) à la troisième section de canal (18), lequel autre bord de transition (23) est conçu de manière arrondie avec un arrondi (24),
et dans lequel ledit insert (11) s'étend au moins du bord de transition (20) entre les première et troisième sections de canal (6, 7) au bord de transition (23) entre les deuxième et troisième sections de canal (7, 18).

13. Raccord selon la revendication 12, **caractérisé en ce que** la surface d'étanchéité s'étend dans la direction du premier axe central et du deuxième axe central de la première section de canal dans la deuxième section de canal.

14. Raccord (1) selon l'une des revendications 11 à 13, **caractérisé en ce que** la surface d'étanchéité (10) s'étend en s'éloignant tangentiellement à l'arrondi (16, 21, 24) à partir du début de l'arrondi (17) respectif.

15. Procédé de moulage par injection pour la fabrication d'un raccord (1) selon l'une des revendications précédentes, **caractérisé en ce que**,
dans une première étape, la paroi du boîtier (2) est réalisée sans l'insert (11), un noyau cylindrique étant prévu par section de canal (6, 7, 18) et dans lequel un noyau supplémentaire fait saillie dans le canal d'écoulement (3) à travers la percée (11), étant recouverte par l'insert (9), pour fournir la forme intérieure du canal d'écoulement (3), et
**en ce que** dans une deuxième étape, au moins un noyau (K) est inséré le long de la première et / ou de la deuxième section de canal (6, 7) dans le canal d'écoulement (3) jusqu'à la zone de la percée (12), dans lequel le noyau vient ainsi en contact avec la surface d'étanchéité (10), que le canal d'écoulement (3) est étanchement fermé par rapport au matériau d'injection à injecter avec l'insert (9), et dans lequel la percée (12) est fermée par injection avec l'insert (11).

16. Procédé de moulage par injection selon la revendication 15, **caractérisé en ce que** les deux étapes sont réalisées dans le même moule d'injection.
